# EUROPEAN PATENT SPECIFICATION

(11) **EP 3 186 304 B1**
(45) Date of publication and mention of the grant of the patent: **27.01.2021**
(21) Application number: 15750877.1
(22) Date of filing: 03.08.2015
(51) Int. Cl.: C08J 7/04

(54) **FILM COATING COMPOSITION AND METHOD**
FILMBESCHICHTUNGSZUSAMMENSETZUNG UND -VERFAHREN
PROCÉDÉ ET COMPOSITION DE REVÊTEMENT PAR FILM

(30) Priority: 06.08.2014 US 201462033692 P
(43) Date of publication of application: 05.07.2017
(73) Proprietor: DUPONT TEIJIN FILMS U.S. LIMITED PARTNERSHIP, Wilmington, Delaware 19805 (US)
(72) Inventor: LIU, Shengsheng, Glen Allen, VA 23060 (US); DENG, Fenghua, Richmond, VA 23233 (US)
(74) Representative: Carpmaels & Ransford LLP
(86) International application number: PCT/US2015/043405
(87) International publication number: WO 2016/022467

(56) References cited:
- EP-A2- 0 819 726
- WO-A1-01/54886
- WO-A1-2007/012805
- WO-A1-2013/056027
- GB-A- 1 497 658
- US-A- 3 616 191

## Description

### BACKGROUND OF THE INVENTION

Polyester films have a broad range of commercial applications. They are widely used in packaging applications, in which case a heat sealable layer is often needed to bond to other surfaces. Ethylene vinyl acetate (EVA) copolymers are used as heat sealable layers in many commercial film applications, but their use on polyester substrates has been made difficult by their lack of good adhesion to polyester. Polyvinylidene chloride (PVDC) is known as an effective primer layer for coating EVA copolymers on polyester, but the possibility of future regulatory restrictions and shortages makes it desirable to find an alternative.

EP 0819726 A2 describes a film base wherein polymers forming a polymeric film surface and selected from polyesters, polyolefins and polyamides are coated with an adhesion enhancing primer containing (a) a functionalized α-olefin containing copolymer, and (b) a crosslinking agent.

### SUMMARY OF THE INVENTION

The invention provides a method of producing a composite film comprising a biaxially oriented polyethylene terephthalate film substrate layer and a crosslinked layer on a surface thereof, wherein the crosslinked layer comprises a reaction product of
a) a functionalized ethylene vinyl acetate copolymer comprising multiple COOH groups per molecule; and
b) an organic crosslinker comprising multiple reactive groups per molecule,
wherein the organic crosslinker is a melamine, said reactive groups being reactive with the COOH groups;
wherein the method comprises applying a solution comprising the functionalized ethylene vinyl acetate copolymer and the organic crosslinker in an organic solvent or mixture thereof to the biaxially oriented polyethylene terephthalate film substrate, followed by drying.

In one aspect, the disclosure provides a composite film including a polyester film substrate layer and a crosslinked layer on a surface thereof, wherein the crosslinked layer includes a reaction product of
a) a functionalized ethylene vinyl acetate copolymer including multiple COOH groups or multiple alcoholic OH groups per molecule; and
b) an organic crosslinker including multiple reactive groups per molecule, the reactive groups being reactive with the COOH or alcoholic OH groups;
wherein the adhesion strength between the substrate layer and the crosslinked layer is at least 177g/cm (450g/inch).

In another aspect, the disclosure provides a method of joining the composite film, optionally further including a heat-sealable polymer layer on the crosslinked layer, to a container or a self-supporting film. The method includes contacting the crosslinked layer or the heat-sealable polymer layer with the container or the self-supporting film or under heat sealing conditions.

### DETAILED DESCRIPTION OF THE INVENTION

The invention provides method of producing a composite film comprising a polyester substrate layer having thereon a layer of crosslinked EVA copolymer, which may in turn have on its surface a layer comprising a polymer. Typically, the layer is heat sealable. Typically, the layer of crosslinked EVA copolymer is coextensive with the polyester substrate layer. If present, the layer comprising a polymer on the surface of the layer of crosslinked EVA copolymer is typically coextensive with the layer of crosslinked EVA copolymer.

Composite films produced by the method of the invention may be joined by heat sealing to a container or a self-supporting film, using the layer of crosslinked EVA copolymer or the layer of polymer on its surface as the contacting layer with the container of self-supporting film. The container may be pre-formed, and the surface of the container that is to be joined to the composite film may be made of any material. Suitable exemplary materials include glass, metals, and polymers. Exemplary polymers include nylons and polyesters, especially polyesters that are not themselves heat sealable. One such non-heat sealable polyester is polyethylene terephthalate (PET). Similarly, the surface of the self-supporting film to which the composite film is heat sealed may be made from any of these same materials.

### Functionalized EVA copolymers

The inventors have found that certain EVA copolymers functionalized with COOH or OH groups, when crosslinked with organic crosslinkers, provide excellent priming for adhesion of polymer layers to polyester substrates. Adhesion strength between the crosslinked EVA layer and the substrate is at least 177g/cm (450g/inch), typically at least 236g/cm (600g/inch), more typically at least 315g/cm (800g/inch), or at least 394g/cm (1000g/inch). In some embodiments, these values refer to adhesion strength to a biaxially oriented PET substrate. The functionalized EVA copolymers typically contain at least 10 wt% vinyl acetate units, or at least 15 wt%, or at least 20 wt%, or at least 25 wt%. Typically they contain at most 50 wt% vinyl acetate units, or at most 40 wt%, or at most 35 wt%.

In the invention, the functionalized EVA copolymers include multiple COOH groups per molecule, i.e., they are COOH-functionalized. Suitable examples include EVA copolymers that include monomer units of one or more of acrylic acid, methacrylic acid, maleic acid, fumaric acid, itaconic acid, and/or other ethylenically unsaturated carboxylic acids. The one or more ethylenically unsaturated carboxylic acids typically constitute at least 0.1 wt% of the monomer units in the functionalized EVA copolymer, or at least 0. 5 wt%, or at least 0.7 wt%, or at least 1.0 wt%. Typically they constitute at most 5.0 wt%, or at most 4.0 wt%, or at most 3.0 wt%.

In some disclosures, the EVA copolymers include multiple OH groups per molecule, i.e., they are OH-functionalized. Suitable examples include EVA copolymers having monomer units of hydroxyethyl methacrylate and/or units of vinyl alcohol. The latter can be obtained by hydrolyzing some of the vinyl acetate units in an EVA copolymer. Typically, the OH-containing units constitute at least 0.1 wt% of the EVA copolymer, or at least 0.5 wt%, or at least 1.0 wt% or at least 1.5 wt%. Typically they constitute at most 20 wt%, or at most 10 wt%, or at most 5 wt%, or at most 3 wt%.

In some embodiments, the functionalized EVA polymers do not include vinyl ester units other than vinyl acetate, and in some embodiments they contain no monomer units other than ethylene, vinyl acetate and the units containing the COOH or OH groups. Specific groups that may be excluded from the COOH-functionalized and/or OH-functionalized EVA copolymers include halogen-containing groups, sulfur-containing groups, phosphorus-containing groups, and substituted or unsubstituted acrylamide or methacrylamide groups, for example *N*-methylol acrylamide. Similarly, any one or more of these specific groups may be excluded from the crosslinked layer and from films including such a layer.

### Organic crosslinkers

Suitable organic crosslinkers for functionalized EVA copolymers include melamines, especially water-insoluble melamines, and they are suitable for use with both COOH-functionalized and OH-functionalized EVA copolymers. Exemplary melamines are available from Cytec under the tradename CYMEL. Other examples include polyisocyanates, such as DESMODUR N3300 and DESMODUR N3600, available from Bayer and MOR-FREE C33, available from Dow; polycarbodiimides, such as SOLUCOTE XL-1, available from DSM NeoResins; crosslinkers containing multiple oxazoline groups, such as EPOCROS WS-300, available from Nippon Shokubai; and crosslinkers containing multiple aziridine groups, such as Crosslinker CX-100, available from DSM NeoResins.

The one or more organic crosslinkers in total will typically be used at a rate of at least 0.1 wt% relative to the functionalized EVA copolymer, or at least 0.2 wt%, or at least 0.5 wt%, or at least 1.0 wt%, or at least 2.0 wt%. Typically the amount will be at most 900 wt%, or at most 500 wt%, or at most 200 wt%, or at most 100 wt%, or at most 50 wt%, or at most 25 wt%, or at most 15 wt%.

A catalyst may also optionally be included. The catalyst may be an acid having a pKa no greater than -1.74, or an amine or ammonium salt thereof, or any combination of these. Typically the acid is an organic acid, and may be an organic sulfonic acid, for example *p*-toluenesulfonic acid. Suitable catalysts are available commercially from Cytec under the tradename CYCAT. If a catalyst is included, the amount will typically be in a range from 1 to 10 wt% relative to the crosslinker.

Optional ingredients for the crosslinked layer may, among others, include one or more of the following: slip additives, e.g., silica such as Syloid 244 and Syloid 620, available from Grace Davison; anti-blocking agents, e.g., fatty acid amides such as KEMAMIDE-EZ and KEMAMIDE-OR, available from Chemtura; anti-fog agents, e.g., sorbitan esters such as ATMER 100, available from Croda Polymer Additives; anti-static agents, e.g., glycerol esters such as ATMER 129, available from Croda Polymer Additives; tackifiers, e.g., polyterpene resins such as PICCOLYTE A125 and PICCOLYTE D115, available from Pinova; UV absorbers, e.g., TINUVIN 477 DW and TINUVIN 1130, available from Ciba; and pigments, e.g., titanium dioxide such as TI-PURE R-101, available from DuPont.

### Coating composition and method

The above components are applied to the polyester substrate from a solution in an organic solvent or mixture thereof. In some embodiments, only toluene and/or THF are used as solvents for the ingredients used to form the crosslinked layer. In some embodiments, any one or more of isopropyl alcohol, water, and amines may be excluded entirely from the compositions used to form the crosslinked layer, and from the layer itself. Amines may sometimes be included only in the form of salts, for example as part of a blocked acid catalyst for melamine crosslinking, but in some cases they are excluded even in this limited capacity. Specific example of amines that may be limited or excluded entirely include mono-, di- and triethanolamine, triethylamine, *N,N*-dimethyl ethanolamine, *N,N*-diethyl ethanolamine, *N*-methyl diethanolamine, di- and triisopropanolamine, morpholine, and 2-amino-2-methyl-1-propanol. PVDC homopolymers and/or copolymers may be excluded from the crosslinked layer and from films including such a layer, as may halogen-containing polymers. Surfactants and/or compounds comprising ethylene oxide or propylene oxide repeat units may be excluded from the crosslinked layer in some embodiments, as may particulate materials in any amount greater than 1, 2, 5, or 10 wt% relative to total nonvolatiles. In some embodiments, the only polymers present in the crosslinked layer are one or more COOH-functionalized or OH-functionalized EVA copolymers and one or more polymeric organic crosslinkers and/or the resulting crosslinked reaction product of these.

Any conventional coating method, such as spray coating, roll coating, slot coating, meniscus coating, immersion coating, wire-bar coating, air knife coating, curtain coating, doctor knife coating, direct and reverse gravure coating, and the like, may be used to apply the coating composition. The coating is then dried, during which the functionalized EVA copolymer is crosslinked by the organic crosslinker. In some embodiments, the drying is at a temperature less than 150°C, or less than 125°C, or less than 115°C, or less than 100°C.

### Polyester substrate

The polyester substrate is biaxially oriented PET. Also disclosed are exemplary polyester substrates including cast PET, uniaxially oriented PET,, and copolyesters comprising or consisting of repeat units of terephthalic acid, aliphatic dicarboxylic acids and diols. Other substrates include polylactic acid and polyhydroxybutyrate. In some embodiments, the polyester substrate has shrinkage of less than 5% in length and/or width upon exposure to boiling water for five seconds. In some embodiments, the polyester substrate is a single layer of polyester having no layer comprising any polymer, or no layer of metal, on the surface opposite the one bearing the crosslinked EVA layer. In some embodiments, the polyester substrate is transparent.

### Heat sealable layer

The heat sealable layer comprises an ethylene copolymer. Typically, the ethylene copolymer will be an EVA copolymer, which may include monomer units in addition to the ethylene and vinyl acetate units.

The ethylene copolymer is the major component of the heat sealable layer, constituting at least 50%, preferably at least 65%, preferably at least 80%, preferably at least 90%, and preferably at least 95% by weight of the total weight of the heat sealable layer. Typically, one or more tackifiers, antifog agents, etc. may make up the balance of the layer. In some cases, the heat-sealable layer consists of the ethylene copolymer.

During heat sealing, the polymeric material of the heat sealable layer softens to a sufficient extent that its viscosity becomes low enough to allow adequate wetting for it to adhere to the surface to which it is being bonded. The heat seal bond is effected by heating to soften the polymeric material of the heat sealable layer without melting any of the other layers in either film, and applying pressure. Thus, the polymeric material of the heat sealable layer should begin to soften at a temperature such that the heat seal bond can be formed at a temperature which is less than the melting temperature of the polymeric material of the substrate. In one embodiment, the polymeric material of the heat sealable layer should begin to soften at a temperature such that the heat-seal bond can be formed at a temperature which is between about 5 and 50°C below, preferably between about 5 and 30°C below, and preferably at least about 10°C below the melting temperature of the polymer material of the substrate.

### EXAMPLES

Unless otherwise indicated, all compositional percentages and ratios recited herein are on a weight basis and all coating weights refer to dried coating weights. The following ingredients are referred to in the Examples discussed further below. ELVAX 4260 - EVA containing 28% vinyl acetate, 71% ethylene and about 1% methacrylic acid units, available from DuPont.
ELVAX 3180 - EVA containing 28% vinyl acetate and 72% ethylene units, available from DuPont.
ELVAX 3185 - EVA containing 32% vinyl acetate and 68% ethylene units, available from DuPont.
NUCREL 960 - 85%/15% Ethylene/methacrylic acid copolymer, available from DuPont.
CYMEL 350 - water soluble, highly methylated monomeric melamine resin available from Cytec
CYMEL XW 3106 - water insoluble, specially alkylated high solids melamine resin, available from Cytec
SYLOID 620 - amorphous synthetic silica, available from Grace
KEMAMIDE EZ - fatty amide slip agent, available from Chemtura

### Preparation of heat sealable EVA top coating solution

Elvax 3185 (31g, DuPont, 32% vinyl acetate by weight), Syloid 620 (0.3g, Grace) and KEMAMIDE EZ (0.5g, Chemtura) were dissolved in 200 mL of toluene at 65C and stored in a forced air oven at 50°C prior to coating this solution on primed film.

### Preparation of ethylene-vinyl acetate copolymer with vinyl alcohol (EVA-OH)

An ethylene-vinyl acetate/ vinyl alcohol copolymer was prepared by partially hydrolyzing Elvax 3180 (DuPont, 28% vinyl acetate by weight) according to the method of M. Flores, G. Hernandez, A. Escobar, J. Cardoso, A. Palma, A. Maciel, E. Sanchez, and O. Manero, J. Appl. Polym. Sci., 67, 1071 (1998). Elvax 3180 (20g) was dissolved in 240 mL toluene at 80°C in a 500 mL flask equipped with a reflux condenser, followed by adding 8.2 mL of 1N KOH solution in diethylene glycol. The reaction was allowed to proceed for 30 min and then the contents in flask were precipitated and washed with ethanol and dried in a forced air oven at 50°C. The resulting EVA-OH contained about 1.6 wt% vinyl alcohol.

### EVA heat sealable layer on crosslinkable EVA primed PET film

Heat seal strength was determined as follows. One half of a coated A4 sheet of film was sealed to itself (coated side to coated side) using a Sentinel heat sealer (Model 12 by Packaging Industries Group Inc.). The heat sealer was operated for 0.5 seconds at 207kPa (30psi) with a 150°C top jaw and a 40°C bottom jaw. The sealed sample was marked and cut into 25mm width strips, the folded portion was slit and the heat seal strength was determined by peel strength testing on an INSTRON® model 4464 test machine. The jaws were set 50 mm apart. The upper jaw held one piece of the sealed sample and traveled up at a speed of 250 mm/min, while the lower jaw held the other piece of the sealed sample and was stationary. The maximum force needed to separate the two pieces of film was recorded. Three sealed sample pieces were measured for each coated sample. Peel strength values obtained in this way represent the minimum possible adhesion strength between the substrate layer and the crosslinked coating layer, since cohesive strength or some other parameter may be the limiting peel strength factor.
Example 1 - A primer coating solution was prepared by dissolving 10g of Ethylene-Vinyl acetate (EVA) resin Elvax 4260 (DuPont) in 90g of a mixture of toluene and THF (weight ratio: 70/30) at 50°C, followed by adding 0.08g of p-toluenesulfonic acid monohydrate (PTSA, Aldrich) (5% solution in THF) and 1.6g of CYMEL XW 3106 (Cytec Industries Inc.).
   This solution was coated on a 23 µm PET film (MYLAR DS) using a Mayer coating rod (coating weight, 0.9 g/m²). The coated film was transferred to a forced air oven preset to 125°C for drying and curing for 3 min. The primed film was then coated with heat sealable EVA top coating solution at a coating weight of 4.2g/m², followed by drying at 125°C for 2 minutes. Peel strength was 650g/cm (1650g/inch), indicating that the adhesion strength between the PET substrate layer and the crosslinked primer coating layer was at least 650g/cm (1650g/inch).
Example 2 - Example 1 was repeated, except that 5.0 g of CYMEL XW 3106 and 0.25g of PTSA were used in primer coating. Peel strength was 551g/cm (1400g/inch).
Example 3 - Example 1 was repeated, except that 1.0g of Elvax 4260, 9.0 g of CYMEL XW 3106 and 0.45g of PTSA were used in primer coating. Peel strength was 354g/cm (900g/inch).
Example 4 - Example 1 was repeated, except that the primer coating drying temperature was decreased to 105°C. Peel strength was 669g/cm (1700g/inch).
Example 5 - Example 1 was repeated, except that 0.1g of CYMEL XW 3106 and 0.01g of PTSA were used in the primer formulation. Peel strength was 642g/cm (1630g/inch).
Example 6 - Example 1 was repeated, except that 0.01g of CYMEL XW 3106 and 0.001g of PTSA were used in the primer formulation. Peel strength was 378g/cm (960g/inch).
Example 7 - Example 1 was repeated, except that PTSA was removed from formulation. Peel strength was 354g/cm (900g/inch).
Example 8 - Example 1 was repeated, except that PTSA was removed from formulation and the drying temperature of primer coating was increased to 150°C. Peel strength was 583g/cm (1480g/inch).
Example 9 - Example 1 was repeated, except that the 10g of ELVAX 4260 was replaced by 5.0g of ELVAX 4260 and 5.0g of ELVAX 3180 (DuPont). Peel strength was 433g/cm (1100g/inch).
Example 10 - Example 1 was repeated, except that 1.6g of CYMEL XW 3106 was replaced by 1.6g of CYMEL 350 (Cytec Industries Inc.) and the drying temperature of primer coating was increased to 150°C. Peel strength was 614g/cm (1560g/inch).
Comparative Example 11 - Example 1 was repeated, except that the 10g of ELVAX 4260 was replaced by 10g of OH-functionalized EVE copolymer prepared above. Peel strength was 583g/cm (1480g/inch).
Comparative Example 12 - Example 1 was repeated, except that the 10g of ELVAX 4260 was replaced by 10g of OH-functionalized EVA copolymer (EVA-OH) prepared above and 0.5g of MOR-FREE C33 (Dow Chemical) was used as a crosslinking agent. Peel strength was 547g/cm (1390g/inch).
Comparative Example 13 - Heat sealable EVA top coating solution was directly coated on a 23 µm PET film (MYLAR DS) at a coating weight of 4.2g/m², followed by drying at 125°C for 2 minutes. Peel strength was 110g/cm (280g/inch).
Comparative Example 14 - Example 1 was repeated, except that PTSA and CYMEL XW 3106 were removed from formulation. Peel strength was 118g/cm (300g/inch).
Comparative Example 15 - Example 1 was repeated, except that CYMEL XW 3106 was removed from the formulation. Peel strength was 118g/cm (300g/inch).
Comparative Example 16 - Example 1 was repeated, except that the 10g of ELVAX 4260 was replaced by 10g of ELVAX 3180. Peel strength was 165g/cm (420g/inch).
Comparative Example 17 - Example 1 was repeated, except that Elvax 4260 was removed and 10g of CYMEL XW 3106 and 0.5g of PTSA were used in the primer coating. Peel strength was less than 39g/cm (100g/inch).

### Cross-linkable EVA coating without separate heat sealable layer

A series of PET films was provided with only the layer containing the functionalized EVA copolymer and organic crosslinker, without a top coat of heat sealable EVA top coating solution, to assess the ability of the crosslinkable EVA copolymer layer to perform as a heat sealable layer. Heat seal strength was assessed using the same approach and equipment as described above for EVA top coating samples, except that the coating sample was air dried and dwell time in the heat sealer was extended to 90 seconds.

Example 18 - A coating solution was prepared by dissolving 10g of ELVAX 4260 (DuPont) in 90g of a mixture of toluene and THF (weight ratio: 70/30) at 50°C, followed by adding Syloid 620 (0.15g, Grace), KEMAMIDE EZ (0.1g, Chemtura), 0.01g of *p*-toluenesulfonic acid monohydrate (PTSA, Aldrich) and 0.1g of CYMEL XW 3106 (Cytec Industries Inc.). This solution was coated on a 36 µm PET film (MYLAR DS) using

Mayer coating rod at a coating weight of 7.5g/m². The coated sample was dried in air for 15 min. Peel strength was 1260g/cm (3200g/inch), indicating that the adhesion strength between the PET substrate layer and the crosslinked coating layer was at least 1260g/cm (3200g/inch).

Example 19 - Example 18 was repeated, except that 1.5g of CYMEL XW 3106 and 0.075g of PTSA were used. Peel strength was 1181g/cm (3000g/inch).

Example 20 - Example 18 was repeated, except that 5.0g of CYMEL XW 3106 and 0.25g of PTSA were used. Peel strength was 748g/cm (1900g/inch).

Example 21 - Example 18 was repeated, except that 10g of CYMEL XW 3106 and 0.5g of PTSA were used. Peel strength was 512g/cm (1300g/inch).

Example 22 - Example 18 was repeated, except that 5.0g of ELVAX 4260, 10g of CYMEL XW 3106 and 0.5g of PTSA were used. Peel strength was 217g/cm (550g/inch).

Comparative Example 23 - Example 18 was repeated, except that CYMEL XW 3106 and PTSA were not included in the coating. Peel strength was 138g/cm (350g/inch).

Examples 18-21 show that crosslinked layers of the invention over a broad compositional range are suitable for use as stand-alone heat seal layers, i.e., no additional heat seal layer is needed on top. The range of suitable compositions is even broader for use as a primer for traditional heat seal layers.

## Claims

1. A method of producing a composite film comprising a biaxially oriented polyethylene terephthalate film substrate layer and a crosslinked layer on a surface thereof, wherein the crosslinked layer comprises a reaction product of
a) a functionalized ethylene vinyl acetate copolymer comprising multiple COOH groups per molecule; and
b) an organic crosslinker comprising multiple reactive groups per molecule, wherein the organic crosslinker is a melamine, said reactive groups being reactive with the COOH groups;
wherein the method comprises applying a solution comprising the functionalized ethylene vinyl acetate copolymer and the organic crosslinker in an organic solvent or mixture thereof to the biaxially oriented polyethylene terephthalate film substrate, followed by drying.

2. The method of claim 1, wherein the crosslinked layer further comprises a catalyst capable of catalyzing the reaction.

3. The method of claim 2, wherein the catalyst is an acid.

4. The method of claim 2 or 3, wherein the catalyst is an organic acid.

5. The method of any one of claims 1-4, wherein the crosslinker is present at from 0.1 wt% to 900 wt% relative to the functionalized ethylene vinyl acetate copolymer.

6. The method of any one of claims 1-5, wherein the composite film further comprises a polymer layer on the crosslinked layer.

7. The method of claim 6, wherein the polymer layer comprises a heat sealable polymer.

8. The method of claim 6 or 7, wherein the polymer layer comprises an ethylene copolymer.

9. The method of any one of claims 6-8, wherein the polymer layer comprises an ethylene vinyl acetate copolymer.

10. The method of any one of claims 1-9, wherein the functionalized ethylene vinyl acetate copolymer includes monomer units of acrylic acid.

11. The method of any one of claims 1-9, wherein the functionalized ethylene vinyl acetate copolymer includes monomer units of methacrylic acid.

## Patentansprüche

1. Verfahren zur Herstellung einer Verbundfolie, die eine biaxial orientierte Polyethylenterephthalatfoliensubstratschicht und eine vernetzte Schicht auf einer Oberfläche davon umfasst, wobei die vernetzte Schicht das Reaktionsprodukt von
a) einem funktionalisierten Ethylen-Vinylacetat-Copolymer mit mehreren COOH-Gruppen pro Molekül und
b) einem organischen Vernetzer mit mehreren reaktiven Gruppen pro Molekül, wobei es sich bei dem organischen Vernetzer um ein Melamin handelt, wobei die reaktiven Gruppen gegenüber den COOH-Gruppen reaktiv sind, umfasst;
wobei das Verfahren das Aufbringen einer Lösung, die das funktionalisierte Ethylen-Vinylacetat-Copolymer und den organischen Vernetzer in einem organischen Lösungsmittel oder Lösungsmittelgemisch umfasst, auf das biaxial orientierte Polyethylenterephthalatfoliensubstrat mit anschließendem Trocknen umfasst.

2. Verfahren nach Anspruch 1, wobei die vernetzte Schicht ferner einen Katalysator, der die Reaktion katalysieren kann, umfasst.

3. Verfahren nach Anspruch 2, wobei es sich bei dem Katalysator um eine Säure handelt.

4. Verfahren nach Anspruch 2 oder 3, wobei es sich bei dem Katalysator um eine organische Säure handelt.

5. Verfahren nach einem der Ansprüche 1-4, wobei der Vernetzer in einer Menge von 0,1 Gew.-% bis 900 Gew.-%, bezogen auf das funktionalisierte Ethylen-Vinylacetat-Copolymer, vorliegt.

6. Verfahren nach einem der Ansprüche 1-5, wobei die Verbundfolie ferner eine Polymerschicht auf der vernetzten Schicht umfasst.

7. Verfahren nach Anspruch 6, wobei die Polymerschicht ein heißsiegelfähiges Polymer umfasst.

8. Verfahren nach Anspruch 6 oder 7, wobei die Polymerschicht ein Ethylen-Copolymer umfasst.

9. Verfahren nach einem der Ansprüche 6-8, wobei die Polymerschicht ein Ethylen-Vinylacetat-Copolymer umfasst.

10. Verfahren nach einem der Ansprüche 1-9, wobei das funktionalisierte Ethylen-Vinylacetat-Copolymer Monomereinheiten von Acrylsäure enthält.

11. Verfahren nach einem der Ansprüche 1-9, wobei das funktionalisierte Ethylen-Vinylacetat-Copolymer Monomereinheiten von Methacrylsäure enthält.

## Revendications

1. Procédé de production d'un film composite comprenant une couche de substrat de type film de poly(téréphtalate d'éthylène) orienté de manière biaxiale et une couche réticulée sur une surface de celui-ci, la couche réticulée comprenant un produit de réaction
a) d'un copolymère fonctionnalisé d'éthylène-acétate de vinyle comprenant plusieurs groupes COOH par molécule ; et
b) d'un agent de réticulation organique comprenant plusieurs groupes réactifs par molécule, l'agent de réticulation organique étant une mélamine, lesdits groupes réactifs étant réactifs vis-à-vis des groupes COOH ;
le procédé comprenant l'application d'une solution comprenant le copolymère fonctionnalisé d'éthylène-acétate de vinyle et l'agent de réticulation organique dans un solvant organique ou un mélange correspondant au substrat de type film de poly(téréphtalate d'éthylène) orienté de manière biaxiale, suivie par un séchage.

2. Procédé selon la revendication 1, la couche réticulée comprenant en outre un catalyseur capable de catalyser la réaction.

3. Procédé selon la revendication 2, le catalyseur étant un acide.

4. Procédé selon la revendication 2 ou 3, le catalyseur étant un acide organique.

5. Procédé selon l'une quelconque des revendications 1 à 4, l'agent de réticulation étant présent à raison de 0,1 % en poids à 900 % en poids par rapport au copolymère fonctionnalisé d'éthylène-acétate de vinyle.

6. Procédé selon l'une quelconque des revendications 1 à 5, le film composite comprenant en outre une couche de polymère sur la couche réticulée.

7. Procédé selon la revendication 6, la couche de polymère comprenant un polymère thermoscellable.

8. Procédé selon la revendication 6 ou 7, la couche de polymère comprenant un copolymère d'éthylène.

9. Procédé selon l'une quelconque des revendications 6 à 8, la couche de polymère comprenant un copolymère d'éthylène-acétate de vinyle.

10. Procédé selon l'une quelconque des revendications 1 à 9, le copolymère fonctionnalisé d'éthylène-acétate de vinyle comportant des motifs monomériques d'acide acrylique.

11. Procédé selon l'une quelconque des revendications 1 à 9, le copolymère fonctionnalisé d'éthylène-acétate de vinyle comportant des motifs monomériques d'acide méthacrylique.
